# FASCICULE DE BREVET EUROPEEN

(11) **EP 0 461 974 B1**
(45) Date de publication et mention de la délivrance du brevet: **15.11.1995**
(21) Numéro de dépôt: 91401514.4
(22) Date de dépôt: 10.06.1991
(51) Int. Cl.: H02G 3/06

(54) **Eclisse pour chemin de câbles**
Schiene für Kabelrinne
Joint for cable duct

(30) Priorité: 11.06.1990 FR 9007230
(43) Date de publication de la demande: 18.12.1991
(73) Titulaire: KRIEG ET ZIVY INDUSTRIES, F-92100 Boulogne-Billancourt (FR)
(72) Inventeur: Vimard, Jean, F-60610 La Croix Saint Ouen (FR); Deciry, James, F-60200 Compiegne (FR)
(74) Mandataire: CABINET BONNET-THIRION

(56) Documents cités:
- FR-A- 2 611 830
- NL-A- 7 412 503

## Description

La présente invention concerne d'une manière générale les chemins de câbles, et elle vise plus particulièrement ceux de ces chemins de câbles qui, réalisés en tôle, présentent de place en place des perforations.

Ainsi qu'on le sait, ces chemins de câbles sont usuellement établis tronçon par tronçon, et il convient de convenablement solidariser l'un à l'autre leurs tronçons successifs.

Pour ce faire, il est usuellement mis en oeuvre des éclisses rigides, qu'il est nécessaire de fixer à l'un et l'autre de ces tronçons de chemin de câbles.

A ce jour, la fixation de ces éclisses se fait par boulonnage.

Autrement dit, il est mis en oeuvre, pour cette fixation, des ensembles vis-écrou, qui traversent les tronçons de chemin de câbles à relier à la faveur des perforations préexistant dans ceux-ci, et qui traversent les éclisses à la faveur de perforations prévues à cet effet dans ces dernières.

Les opérations correspondantes, qui en sus des éclisses, nécessitent donc de disposer d'une fourniture supplémentaire, à savoir un lot suffisant d'ensembles vis-écrou, sont longues et malaisées à exécuter, notamment lorsque le chemin de câbles concerné est installé en hauteur, par exemple à proximité d'un plafond.

Elles se traduisent en outre fréquemment par une perte non négligeable en vis et/ou écrous, ceux-ci pouvant malencontreusement venir échapper à la pose.

Enfin, les ensembles vis-écrou mis en oeuvre ne manquent pas, le plus souvent, d'être à l'origine d'une saillie appréciable, celle due à la tête de leur vis, à l'intérieur des tronçons de chemin de câbles concernés.

Le document NL-A-7412503 décrit une éclisse comportant en saillie sur une platine au moins deux pattes de verrouillage qui, longitudinalement espacées l'une de l'autre, sont destinées à coopérer chacune respectivement avec les deux tronçons de chemin de câbles à réunir, par engagement dans des perforations de ceux-ci, et qui, s'étendant chacune en porte-à-faux à compter de leur racine, sont destinées à être pliées après traversée d'une telle perforation.

Ces pattes de verrouillage s'étendent en largeur sur la totalité de la longueur de leur racine, et leur pliage se fait très exactement suivant cette dernière.

Avec de telles pattes de verrouillage, le pincement des tronçons de chemin de câbles est mal aisé à contrôler, au détriment de la tenue de l'éclisse, et donc, de la liaison qu'elle doit assurer.

Dans le document FR-A-2611830, l'éclisse comporte aussi des pattes de verrouillage qui s'étendent en largeur sur la totalité de la longueur de leur racine, mais ces pattes de verrouillage ne sont pas à plier, la mise en oeuvre de l'éclisse impliquant le déplacement longitudinal de celle-ci le long des tronçons de chemin de câbles après l'engagement de ces pattes de verrouillage dans des perforations de ces derniers.

N'impliquant pas de pincement des tronçons de chemin de câbles, la tenue de l'éclisse est, comme précédemment, mal assurée.

La présente invention a d'une manière générale pour objet une disposition permettant d'éviter ces inconvénients.

De manière plus précise, elle a pour objet une éclisse pour chemin de câbles présentant de place en place des perforations du genre comportant, en saillie sur une platine, au moins deux pattes de verrouillage, qui, longitudinalement espacées l'une de l'autre, sont destinées à coopérer chacune respectivement avec deux tronçons de chemin de câbles successifs à réunir, et qui, s'étendant chacune en porte-à-faux à compter d'une racine, sont destinées à être pliées après traversée d'une perforation du tronçon de chemin de câbles correspondant, cette éclisse étant d'une manière générale caractérisée en ce que la racine des pattes de verrouillage ne s'étend que sur une partie de leur longueur et en ce que ces pattes de verrouillage sont destinées à être pliées suivant une ligne de pliage transversale distincte de cette racine et sensiblement perpendiculaire à celle-ci.

Ainsi, plus aucun ensemble vis-écrou n'est nécessaire, l'éclisse portant par elle-même ses moyens de fixation.

Après engagement des pattes de verrouillage constituant ces moyens de fixation dans des perforations des tronçons de chemin de câbles à relier, il suffit de les plier.

Autrement dit, suivant l'invention, il est en quelque sorte procédé par agrafage, et non plus par boulonnage.

De préférence, l'éclisse suivant l'invention comporte, en outre, en saillie, au moins deux pions de positionnement, qui, longitudinalement espacés l'un de l'autre, sont destinés à coopérer chacun respectivement en emboîtement avec une perforation des deux tronçons de chemin de câbles concernés.

Outre que ces pions de positionnement, qui interviennent en quelque sorte par encliquetage, permettent avantageusement une implantation précise des tronçons de chemin de câbles à relier avant le pliage des pattes de verrouillage assurant ensuite le verrouillage de l'éclisse sur ces tronçons de chemin de câbles, ils sont avantageusement à même d'encaisser par eux-mêmes le couple de cisaillement auquel peut être soumise cette éclisse, en épargnant alors aux pattes de verrouillage ce couple de cisaillement.

La sécurité de la liaison assurée s'en trouve renforcée.

De préférence, également, celui des bords longitudinaux d'une patte de verrouillage qui, issu de sa racine, est le plus proche du côté de la platine sur laquelle elle fait saillie, s'étend en oblique par rapport à cette platine, en s'écartant de celle-ci au fur et à mesure qu'il s'éloigne de cette racine.

Ainsi, il se développe avantageusement, à l'égard des flancs latéraux des tronçons de chemin de câbles concernés, lors du pliage d'une patte de verrouillage, un effet de coincement favorable au verrouillage recherché.

En outre, cette obliquité du bord longitudinal concerné des pattes de verrouillage d'une éclisse suivant l'invention permet avantageusement une adaptation de celle-ci à des épaisseurs de tôle différentes pour les tronçons de chemin de câbles à relier.

Autrement dit, une même éclisse suivant l'invention peut, dans une large gamme, se satisfaire d'épaisseurs de tôle différentes pour ces tronçons de chemin de câbles.

Enfin, outre une grande rapidité de mise en oeuvre, l'éclisse suivant l'invention conduit avantageusement à l'absence de saillie notable à l'intérieur des tronçons de chemin de câbles à relier, cette saillie se limitant en pratique à celle due à la seule épaisseur de sa platine.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective de deux tronçons de chemin de câbles reliés par des éclisses suivant l'invention ;
la figure 2 est, à échelle supérieure, une vue en perspective d'une de ces éclisses ;
la figure 3 en est, à échelle encore supérieure, une vue partielle en coupe longitudinale, suivant la ligne III-III de la figure 2 ;
la figure 4 en est, à l'échelle de la figure 2, une vue en coupe transversale, suivant la ligne IV-IV de la figure 2 ;
les figures 5A, 5B sont, à échelle encore supérieure, des vues partielles en perspective illustrant deux phases successives de mise en oeuvre de l'éclisse suivant l'invention ;
la figure 6 est, à échelle réduite, une vue en perspective d'un outil susceptible d'être utilisé pour faciliter cette mise en oeuvre ;
la figure 7 est une vue en coupe transversale qui, analogue à celle de la figure 4, se rapporte à une variante de réalisation ;
la figure 8 est une vue partielle en perspective qui, reprenant pour partie celle de la figure 2, se rapporte à une autre variante de réalisation ;
les figures 9 et 10 sont, à échelle réduite, des vues en élévation d'autres éclisses suivant l'invention ;

Tel qu'illustré sur ces figures, il s'agit, globalement, de relier l'un à l'autre, en les solidarisant l'un à l'autre, deux tronçons successifs de chemin de câbles 10, de même type, disposés bout à bout.

De manière connue en soi, ces tronçons de chemin de câbles 10 ont, transversalement, un profil en U, et ils présentent, de place en place, suivant un réseau régulier, tant sur leur fond 11 que sur leurs flancs latéraux 12, des perforations 13, qui, en pratique, sont allongées en boutonnière.

Soit P1 le pas de ces perforations 13 longitudinalement, et soit P2 leur pas transversalement.

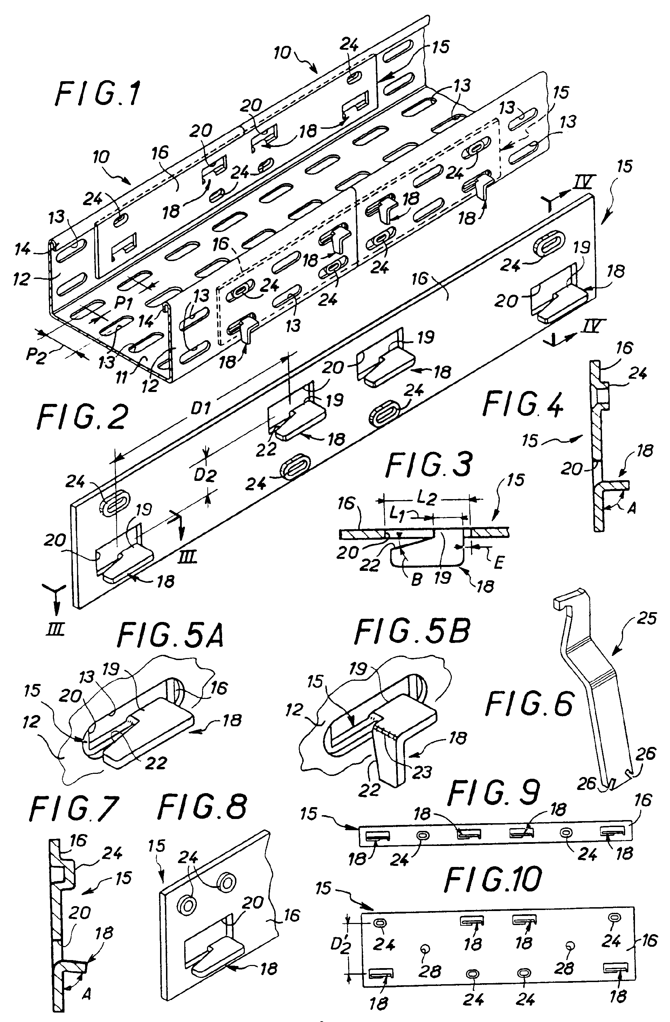

Dans les formes de réalisation représentées sur les figures 1 à 8, il y a, ainsi, sur le fond 11 des tronçons de chemin de câbles 10, quatre rangées de perforations 13, et, sur leurs flancs latéraux 12, deux.

Bien entendu, ces nombres peuvent être différents.

En particulier, suivant la hauteur des flancs latéraux 12, il peut y avoir aussi bien, sur ceux-ci, une seule rangée de perforations 13, ou un nombre de rangées supérieur à deux.

Enfin, dans la forme de réalisation représentée, les flancs latéraux 12 des tronçons de chemin de câbles 10 présentent, le long de leur bord libre, un rebord en forme de crosse 14, qui, dirigé vers leur fond 11, est en saillie sur la surface interne de ces flancs latéraux 12.

En pratique, les deux tronçons de chemin de câbles 10 ainsi constitués sont en tôle.

De manière connue en soi, il est mis en oeuvre, pour relier ces deux tronçons de chemin de câbles 10, deux éclisses 15, qui, adossées, chacune respectivement, aux flancs latéraux 12 de ces tronçons de chemin de câbles 10, s'étendent chacune de l'un à l'autre de ceux-ci, et qui, identiques l'une à l'autre, comportent, chacune, sous la forme d'une plaquette de contour globalement rectangulaire, une platine 16.

Suivant l'invention, une telle éclisse 15 comporte, en saillie sur sa platine 16, au moins deux pattes de verrouillage 18, qui, longitudinalement espacées l'une de l'autre, sont destinées à coopérer chacune respectivement avec les deux tronçons de chemin de câbles 10 à réunir, et qui, s'étendant chacune en porte-à-faux à compter d'une racine 19 de moindre longueur, sont destinées à être pliées suivant une ligne de pliage transversale 23, distincte de cette racine 19 et sensiblement perpendiculaire à celle-ci, après traversée d'une perforation 13 du tronçon de chemin de câbles 10 correspondant.

Par racine 19 de moindre longueur on entend ici une racine 19 qui, tel que représenté, ne s'étend que sur une partie de la longueur des pattes de verrouillage 18.

Dans les formes de réalisation représentées, il y a, pour chacun des deux tronçons de chemin de câbles 10 concernés, deux pattes de verrouillage 18, qui sont espacées l'une de l'autre longitudinalement et/ou transversalement.

Dans les formes de réalisation plus particulièrement représentées sur les figures 1 à 8, qui, comme indiqué ci-dessus, concernent le cas où les flancs latéraux 12 des tronçons de chemin de câbles 10 présentent en hauteur deux rangées de perforations 13, les pattes de verrouillage 18 prévues pour chacun de ces tronçons de chemin de câbles 10 sont non seulement espacées longitudinalement l'une par rapport à l'autre, d'une distance D1 multiple du pas longitudinal P1 des perforations 13, le multiple correspondant étant par exemple, tel que représenté, égal à deux, mais encore, transversalement, d'une distance D2 égale à leur pas transversal P2.

Autrement dit, dans ces formes de réalisation, et à la manière des perforations 13, les pattes de verrouillage 18 sont disposées en hauteur suivant deux rangées.

Par exemple, et tel que représenté, il y a, ainsi, suivant une première rangée, deux pattes de verrouillage 18, qui sont chacune respectivement disposées à proximité des extrémités de la platine 16, et, suivant une deuxième rangée, deux pattes de verrouillage 18 qui, au contraire, sont chacune respectivement disposées au voisinage de la partie médiane de cette platine 16.

Quoi qu'il en soit, dans la forme de réalisation représentée, ces pattes de verrouillage 18 sont toutes orientées dans le même sens, et elles sont toutes chacune respectivement formées à la faveur de crevés 20 de la platine 16.

Ces pattes de verrouillage 18 sont donc toutes d'un seul tenant avec cette platine 16.

En pratique, les crevés 20 dont elles sont issues ont un contour globalement rectangulaire, et elles en bordent le bord inférieur.

Autrement dit, les pattes de verrouillage 18 bordent celui des bords longitudinaux de ces crevés 20 qui est destiné à être le plus proche du fond 11 des tronçons de chemin de câbles 10.

La racine 19 des pattes de verrouillage 18 ne s'étend que sur une partie L1 de la longueur L2 de ce bord longitudinal des crevés 20, en n'étant séparée d'une des extrémités de ce bord longitudinal que par la distance E propre à l'intervention de l'outil nécessaire à leur découpe.

Dans la forme de réalisation représentée sur les figures 1 à 4, l'angle A que font initialement les pattes de verrouillage 18 avec la platine 16 dont elles sont issues est sensiblement droit.

Autrement dit, ces pattes de verrouillage 18 s'étendent dans ce cas sensiblement d'équerre avec la platine 16.

Quoi qu'il en soit, celui, 22, de leurs bords longitudinaux qui, issu de leur racine 19, est le plus proche de la platine 16 sur laquelle elles font saillie, s'étend en oblique par rapport à cette platine 16, en s'écartant de celle-ci au fur et à mesure qu'il s'éloigne de la racine 19.

L'angle B correspondant est par exemple de l'ordre de 10°.

Mais, bien entendu, cette valeur numérique ne doit en rien être considérée comme limitative de l'invention.

Par ailleurs, dans les formes de réalisation représentées, l'éclisse 15 suivant l'invention comporte, en outre, pour chacun des deux tronçons de chemin de câbles 10 concernés, au moins deux pions de positionnement 24, qui, longitudinalement espacés l'un de l'autre, sont destinés à coopérer, chacun respectivement, en emboîtement, avec une perforation 13 de ces deux tronçons de chemin de câbles 10.

Dans les formes de réalisation représentées, pour chacun de ces deux tronçons de chemin de câbles 10, il y a ainsi, à l'image des pattes de verrouillage 18, deux pions de positionnement 24 longitudinalement et/ou transversalement espacés l'un de l'autre.

Dans les formes de réalisation plus particulièrement représentées sur les figures 1 à 8, ces pions de positionnement 24 sont répartis en deux rangées, comme les pattes de verrouillage 18.

En outre, ils alternent avec ces dernières.

Il y a donc, suivant la première rangée de ces pattes de verrouillage 18, deux pions de positionnement 24, qui sont chacun respectivement disposés au voisinage de la partie médiane de la platine 16, et, suivant leur deuxième rangée, deux pions de positionnement 24, qui sont chacun respectivement disposés au voisinage des extrémités de cette platine 16.

Dans la forme de réalisation plus particulièrement représentée sur les figures 1 à 4, il n'y a qu'un pion de positionnement 24 pour une même perforation 13, et il s'agit d'un pion de positionnement 24 allongé en boutonnière à la manière d'une telle perforation 13.

Longitudinalement, la longueur d'un tel pion de positionnement 24 peut, tel que représenté, être inférieure à celle des perforations 13.

Mais, transversalement, sa largeur est complémentaire de celle de ces dernières.

Quoi qu'il en soit, dans les formes de réalisation représentées, les plots de positionnement 24 sont, comme les pattes de verrouillage 18, d'un seul tenant avec la platine 16.

Par exemple, ils sont formés à la faveur d'emboutis de cette platine 16.

Dans la forme de réalisation plus particulièrement représentée sur les figures 1 à 4, il s'agit d'emboutis ouverts.

Par exemple, l'éclisse 15 suivant l'invention est en tôle, comme les tronçons de chemin de câbles 10.

Mais, bien entendu, l'épaisseur de sa platine 16 est supérieure à celle de ceux-ci.

Pour sa mise en oeuvre, une éclisse 15 suivant l'invention est présentée du côté de la surface interne des flancs latéraux 12 des deux tronçons de chemin de câbles 10 successifs à réunir, avec ses pattes de verrouillage 18 et ses pions de positionnement 24 dirigés vers ceux-ci.

Ces pattes de verrouillage 18 et ces pions de positionnement 24 sont conjointement engagés, chacun individuellement, dans des perforations 13 de ces tronçons de chemin de câbles 10.

Les dispositions sont telles que les pattes de verrouillage 18 bordent alors préférentiellement celui des bords longitudinaux des perforations 13 qu'elles traversent qui est le plus proche du fond 11 des tronçons de chemin de câbles 10.

Après traversée de ces perforations 13, elles sont soumises à un effort de pliage.

De préférence, elles sont ainsi toutes pliées vers le bas, en direction, globalement, du fond 11, suivant une ligne de pliage 20 qui, tel que mentionné ci-dessus, est alors sensiblement perpendiculaire à leur racine 19.

Du fait de l'obliquité de leur bord longitudinal 22, les pattes de verrouillage 18 viennent alors, par effet de coincement, fermement appliquer contre les flancs latéraux 12 des tronçons de chemin de câbles 10 la platine 16 dont elles sont issues.

Il en résulte un verrouillage énergique de l'éclisse 15 correspondante sur ces tronçons de chemin de câbles 10.

Il en résulte également une adaptation éventuelle à des épaisseurs de tôle différentes pour les tronçons de chemin de câbles 10.

Par exemple, pour une même éclisse 15, cette épaisseur peut varier entre 0,6 et 1,75 mm.

Mais, comme précédemment, cette valeur numérique ne doit en rien être considérée comme limitative de l'invention.

Quant aux pions de positionnement 24 ils assurent, outre un positionnement initial convenable de cette éclisse 15, l'encaissement du couple susceptible d'intervenir d'un des tronçons de chemin de câbles 10 à l'autre.

En pratique, le pliage des pattes de verrouillage 18 peut être exécuté manuellement, à l'aide si désiré d'un quelconque outil approprié.

A la figure 6, il est représenté, en réduction, un tel outil 25.

Cet outil 25, qui a d'autres fonctions susceptibles par exemple de trouver également leur application dans le domaine des tronçons de chemin de câbles, présente, sur sa tranche, au moins une encoche 26 par laquelle il peut être engagé sur une patte de verrouillage 18.

Il suffit, ensuite, de le faire pivoter autour de celle-ci.

Dans la forme de réalisation représentée, deux encoches 26 sont ainsi prévues, dans les zones d'angle du manche de cet outil 25.

Dans la variante de réalisation représentée sur la figure 7, l'angle A que font initialement les pattes de verrouillage 18 avec la platine 16 est inférieur à 90°.

Le verrouillage de ces pattes de verrouillage 18 s'en trouve renforcé.

En outre, dans cette variante de réalisation, les pions de positionnement 24 sont des pions de positionnement borgnes.

Dans la variante de réalisation représentée sur la figure 8, il y a, pour une même perforation 13 d'un tronçon de chemin de câbles 10, deux pions de positionnement 24.

Il s'agit, alors, de pions de positionnement de contour globalement circulaire.

La variante de réalisation représentée à la figure 9 concerne le cas où les flancs latéraux 12 des tronçons de chemin de câbles 10 à réunir ne comportent qu'une seule rangée de perforations 13.

Dans ce cas, les pattes de verrouillage 18 et les pions de positionnement 24 que comporte l'éclisse 15 suivant l'invention sont eux-mêmes disposés suivant une seule rangée

La variante de réalisation représentée sur la figure 10 concerne au contraire le cas où les flancs latéraux 12 des tronçons de chemin de câbles 10 à réunir comportent trois rangées de perforations 13.

Dans ce cas, les pattes de verrouillage 18 et les pions de positionnement 24 que comporte l'éclisse 15 suivant l'invention sont disposés en deux rangées, comme dans la forme de réalisation représentée sur les figures 1 à 4, mais la distance D′2 dont sont écartées l'une de l'autre ces deux rangées correspond à l'écartement existant entre la rangée inférieure et la rangée supérieure des perforations 13 des flancs latéraux 12 des tronçons de chemin de câbles 10.

Autrement dit, cette distance D'2 est alors égale au double du pas transversal P2 de ces perforations 13.

En outre, dans ce cas, il est prévu, entre les deux rangées correspondantes, suivant une rangée intermédiaire entre celles-ci, deux perforations de contour circulaire 28 dûment espacées longitudinalement l'une de l'autre.

Ainsi qu'on le notera, dans tous les cas, les pattes de verrouillage 18 font saillie vers l'extérieur des tronçons de chemin de câbles 10.

Seule donc fait saillie à l'intérieur de ceux-ci la platine 16 des éclisse 15 mises en oeuvre.

En outre, lorsque, comme indiqué, le pliage des pattes de verrouillage 18 se fait préférentiellement vers le bas, ces pattes de verrouillage 18 ne sont avantageusement pas de nature à gêner la mise en oeuvre d'un couvercle.

Bien entendu, la présente invention ne se limite pas aux formes de réalisation décrites et représentées, mais englobe toute variante d'exécution et/ou de combinaison de leurs divers éléments.

## Revendications

1. Eclisse pour chemin de câbles présentant de place en place des perforations, du genre comportant en saillie sur une platine (16), au moins deux pattes de verrouillage (18), qui, longitudinalement espacées l'une de l'autre, sont destinées à coopérer chacune respectivement avec deux tronçons de chemin de câbles (10) à réunir, et qui, s'étendant chacune en porte-à-faux à compter d'une racine (19), sont destinées à être pliées après traversée d'une perforation (13) du tronçon de chemin de câbles (10) correspondant, caractérisée en ce que, la racine (19) des pattes de verrouillage (18) ne s'étend que sur une partie de leur longueur, et ces pattes de verrouillage (18) sont destinées à être pliées suivant une ligne de pliage transversale (23) distincte de cette racine (19) et sensiblement perpendiculaire à celle-ci.

2. Eclisse suivant la revendication 1, caractérisée en ce que celui (22) des bords longitudinaux d'une patte de verrouillage (18) qui, issu de sa racine (19), est le plus proche de la platine (16) sur laquelle elle fait saillie, s'étend en oblique par rapport à cette platine (16), en s'écartant de celle-ci au fur et à mesure qu'il s'éloigne de ladite racine (19).

3. Eclisse suivant l'une quelconque des revendications 1, 2, caractérisée en ce que, formées à la faveur de crevés (20) de la platine (16), les pattes de verrouillage (18) sont d'un seul tenant avec celle-ci.

4. Eclisse suivant la revendication 3, caractérisée en ce que les pattes de verrouillage (18) bordent le bord inférieur des crevés (20) de la platine (16), c'est-à-dire celui des bords longitudinaux de ces crevés (20) qui est destiné à être le plus proche du fond (11) des tronçons de chemin de câbles (10) correspondants.

5. Eclisse suivant l'une quelconque des revendications 1 à 4, caractérisée en ce que, l'angle (A) que les pattes de verrouillage (18) font initialement avec la platine (16) est sensiblement droit.

6. Eclisse suivant l'une quelconque des revendications 1 à 4, caractérisée en ce que l'angle (A) que les pattes de verrouillage (18) font initialement avec la platine (16) est inférieur à 90°.

7. Eclisse suivant l'une quelconque des revendications 1 à 6, caractérisée en ce que, après traversée de perforations (13) des tronçons de chemin de câbles (10) concernés, les pattes de verrouillage (18) sont pliées vers le bas, en direction, globalement, du fond (11) de ces tronçons de chemin de câbles (10).

8. Eclisse suivant l'une quelconque des revendications 1 à 7, caractérisée en ce que, pour chacun des deux tronçons de chemin de câbles (10) concernés, elle comporte, longitudinalement et/ou transversalement espacées l'une de l'autre, deux pattes de verrouillage (18).

9. Eclisse suivant l'une quelconque des revendications 1 à 8, caractérisée en ce que sa platine (16) comporte en outre en saillie au moins deux pions de positionnement (24), qui, longitudinalement espacés l'un de l'autre, sont destinés à coopérer chacun respectivement en emboîtement avec une perforation (13) des deux tronçons de chemin de câbles (10) concernés.

10. Eclisse suivant la revendication 9, caractérisée en ce que les pions de positionnement (24) alternent avec les pattes de verrouillage (18).

11. Eclisse suivant l'une quelconque des revendications 9, 10, caractérisée en ce que, pour chacun des deux tronçons de chemin de câbles (10) concernés, elle comporte, longitudinalement et/ou transversalement espacés l'un de l'autre, deux pions de positionnement (24).

12. Eclisse suivant l'une quelconque des revendications 9 à 13, caractérisé en ce que, pour une même perforation (13) d'un tronçon de chemin de câbles (10), il y a deux pions de positionnement (24).

13. Eclisse suivant l'une quelconque des revendications 9 à 12, caractérisée en ce que, formés à la faveur d'emboutis de la platine (16), les pions de positionnement (24) sont d'un seul tenant avec celle-ci.

## Patentansprüche

1. Schiene für einen Kabelkanal mit folgenden Merkmalen:
die Schiene weist an verschiedenen Orten verteilte Perforationen auf, die so beschaffen sind, daß sie aufliegend auf einer Platine (16) mindestens zwei Verriegelungsklammern (18) tragen;
die Verriegelungsklammern sind im Längsabstand voneinander angeordnet, sind jeweils zum Zusammenarbeiten bzw. zum Verbinden mit zwei Teilstücken des Kabelkanals (10) ausgelegt und, von einem Basisteil (19) aus herauskragend, sind dazu bestimmt, nach dem Durchdringen der jeweiligen Perforation (13) des Korrespondierenden Teilstückes des Kabelkanals (10) gekrümmt zu werden,
dadurch gekennzeichnet, daß
das Basisteil (19) der Verriegelungsklammer (18) sich nur über einen Teil von deren Länge erstreckt und diese Verriegelungsklammern (18) dazu bestimmt sind, entlang einer quer sich erstreckenden Falzlinie (23) unterschiedlich von diesem Basisteil (19), deutlich senkrecht zu diesem gebogen zu sein.

2. Schiene nach Anspruch 1,
dadurch gekennzeichnet, daß die Längskanten (22) einer Verriegelungsklammer (18), die von ihrer Wurzel (19) aus betrachtet die nächste zur Platine (16) ist, auf der sie herauskragt, sich quer in Bezug auf diese Platine (16) erstreckt und sich in dem Maße von dieser entfernt, wie sie sich von dem Bandteil (19) weiter erstreckt.

3. Schiene nach einem der Ansprüche 1 und 2,
dadurch gekennzeichnet, daß die Verriegelungsklammern (18) durch Einschnitte (20) aus der Platine (16) geformt werden und aus einem Stück mit dieser sind.

4. Schiene nach Anspruch 3,
dadurch gekennzeichnet, daß die Verriegelungsklammern (18) benachbart zu der tiefer liegenden Kante der Einschnitte (20) der Platine (16) sind, und zwar der Längskante der Einschnitte (20), welche die geringste Entfernung zum Boden (11) der korrespondierenden Teilstücke des Kabelkanals (10) aufweist.

5. Schiene nach einem der Ansprüche 1 bis 4,
dadurch gekennzeichnet, daß der Winkel (A) zwischen den Verriegelungsklammern (18) und der Platine (16) ungefähr rechtwinklig ist.

6. Schiene nach einem der Ansprüche 1 bis 4,
dadurch gekennzeichnet, daß der Winkel zwischen den Verriegelungsklammern (18) und der Platine (16) geringer als 90° ist.

7. Schiene nach einem der Ansprüche 1 bis 16,
dadurch gekennzeichnet, daß die Verriegelungsklammern (18) nach dem Durchdringen der Perforation (13) der Teilstücke des Kabelkanals (10) nach unten allgemein in Richtung zum Boden (11) dieser Teilstücke des Kabelkanals (10) gebogen sind.

8. Schiene nach einem der Ansprüche 1 bis 7,
dadurch gekennzeichnet, daß sie für jedes der zwei Teilstücke des Kabelkanals (10) zwei Verriegelungsklammern (18) besitzt, die im Längs- und/oder Querabstand voneinander angeordnet sind.

9. Schiene nach einem der Ansprüche 1 bis 8,
dadurch gekennzeichnet, daß ihre Platine (16) zum Auflegen außerdem mindestens zwei Positionierungsmetallstücke (24) besitzt, die im Längsabstand voneinander angeordnet jeweils zum Zusammenarbeiten bzw. zum Sicheinfügen mit einer Perforation (13) der zwei Teilstücke des Kabelkanals (10) dienen.

10. Schiene nach Anspruch 9,
dadurch gekennzeichnet, daß die Positionierungsmetallstücke (24) in abwechselnder Folge mit den Verriegelungsklammern (18) angeordnet sind.

11. Schiene nach einem der Ansprüche 9 und 10,
dadurch gekennzeichnet, daß sie für jedes der zwei Teilstücke des Kabelkanals (10) zwei Positionierungsmetallstücke (24) besitzt, die im Längs- und/oder Querabstand voneinander angeordnet sind.

12. Schiene nach einem der Ansprüche 9 bis 13,
dadurch gekennzeichnet, daß es für ein und die selbe Bohrung (13) eines Teilstückes des Kabelkanals (10) zwei Positionierungsmetallstücke (24) gibt.

13. Schiene nach einem der Ansprüche 9 bis 12,
dadurch gekennzeichnet, daß die Positionierungsmetallstücke (24) durch das Ausbördeln der Platine (16) geformt werden und aus einem Stück sind mit dieser.

## Claims

1. A strap for cable ducts having perforations at intervals, of the type comprising at least two locking lugs (18) projecting from a plate (16), which, spaced apart longitudinally from one another, are each intended to co-operate respectively with two sections of cable duct (10) to be joined and which, each extending overhung from a base (19), are intended to be bent after passing through a perforation (13) in the corresponding section of cable duct (10), characterised in that the base (19) of the locking lugs (18) extends only over a part of their length, and in that these locking lugs (18) are intended to be bent along a transverse bending line (23) separate from said base (19) and substantially perpendicular thereto.

2. A strap according to claim 1, characterised in that the longitudinal edge (22) of one locking lug (18) which, extending from its base (19), is nearest the plate (16) over which it projects, extends obliquely in relation to said plate (16) and becomes more distant therefrom as it extends away from said base (19).

3. A strap according to either claim 1 or claim 2, characterised in that the locking lugs (18), which are formed by means of cut-outs (20) in the plate (16), are integral with the latter.

4. A strap according to claim 3, characterised in that the locking lugs (18) border the lower edge of the cut-outs (20) of the plate (16), i.e. the longitudinal edge of these cut-outs (20) which is intended to be closest to the bottom (11) of the corresponding sections of cable duct (10).

5. A strap according to any one of claims 1 to 4, characterised in that the angle (A), which the locking lugs (18) initially form with the plate (16), is substantially a right angle.

6. A strap according to any one of claims 1 to 4, characterised in that the angle (A), which the locking lugs (18) initially form with the plate (16), is less than 90°.

7. A strap according to any one of claims 1 to 6, characterised in that, after passing through the perforations (13) of the relevant sections of cable duct (10), the locking lugs (18) are bent downwards generally in the direction of the bottom (11) of these sections of cable duct (10).

8. A strap according to any one of claims 1 to 7, characterised in that, for each of the two relevant sections of cable duct (10), it comprises two locking lugs (18) longitudinally and/or transversely spaced apart from one another.

9. A strap according to any one of claims 1 to 8, characterised in that its plate (16) further comprises at least two projecting positioning studs (24) which, longitudinally spaced apart from one another, are each intended to co-operate respectively in engagement with a perforation (13) of the two relevant sections of cable duct (10).

10. A strap according to claim 9, characterised in that the positioning studs (24) alternate with the locking lugs (18).

11. A strap according to either claim 9 or claim 10, characterised in that, for each of the two relevant sections of cable duct (10), it comprises two positioning studs (24) longitudinally and/or transversely spaced apart from one another.

12. A strap according to any one of claims 9 to 13, characterised in that for one perforation (13) of a section of cable duct (10) there are two positioning studs (24).

13. A strap according to any one of claims 9 to 12, characterised in that the positioning studs (24), which are formed by being stamped from the plate (16), are integral with the latter.
